# EUROPEAN PATENT APPLICATION

(11) **EP 1 816 641 A1**
(43) Date of publication of application: **08.08.2007**
(21) Application number: 04799120.3
(22) Date of filing: 11.11.2004
(51) Int. Cl.: G11B 7/007

(54) **OPTICAL RECORDING DISC AND METHOD FOR RECORDING DATA ON AN OPTICAL RECORDING DISC**

(71) Applicant: Soft-R Research LLC, Dover, DE 19901 (US)
(72) Inventor: PINSON, Jean-Marc, F-73490 La Ravoire (FR)
(74) Representative: Barlocci, Anna
(86) International application number: PCT/IB2004/052387
(87) International publication number: WO 2006/051352

(57) **Abstract**

The invention relates to an optical recording disc (20) comprising a read only area (21) and a recordable area (22) that is **characterized in that** the read only area (21) comprises means (24) for recording data on the recordable area (22).

## Description

The present invention relates to optical recording discs, and more particularly, to a hybrid disc comprising a read only memory (ROM) area and a recordable area, in which the read only area comprises a program for recording data on the recordable area. It also refers to a method for recording data on an optical recording disc.

### Background of the invention

Optical recording discs for data storage are known in the art, having a protected inner layer in which data bits are stored by means of different technologies, although they are read, in all of them, by means of an incident laser beam. This inner layer comprises a spiral track having the same number of bits per centimetre in all of its sections, a constant linear density being achieved for taking advantage from the storage means in a more efficient way. For this reason, in reading and recording of known optical discs, as the laser beam is moved away from the center of the disc, the speed is decreased, since the spiral has, at the center, a shorter length than at the outer edges. With this speed adaptation (variable angular speed) it is achieved that the amount of bits read or recorded per second is constant in any section of the spiral.

Depending on the technology used for recording of the disclosed optical discs, different variants are obtained. In this way, when they are mould recorded during manufacturing, from a nickel mould, the CD-ROM and the DVD-ROM (larger capacity than the CD-ROM) are obtained; whilst when they are recorded by the action of a laser CD-R, DVD-R and DVD+R are obtained. Referring to DVD-R or DVD+R, recording is carried out in the same way that in a CD-R, although recording is much more delicate as data density is higher, due to its larger capacity of storage.

Basically, the optical discs recorded by the action of a laser have the inner layer protected in the form of an opaque material layer which, when subjected to laser during recording, is burnt. Burnt areas are referred to as pits, while the areas remaining intact are referred to as lands (information is coded by using a pits and lands code having different lengths). When reading is carried out, the laser light used only penetrates into those areas which have been previously labelled with a pit. Behind the inner layer (data layer), there is another reflective, usually metallic, layer that, when a light beam is emitted by the reader on a land, no reflection is received. However, when the light beam reaches a pit, the light reaches the upper layer and the reflection of the emitted light is received.

From the technique described in the above paragraph, optical laser-recording discs having larger capacity of storage than the described discs have been developed in the last times: the recordable dual-layer DVDs. Such discs comprise two data layers, with their respective metallic reflective layers. The elements in the outer layer are semi-transparent, so that elements in a second data layer may be reached by using a different wavelength. For recording the inner data layer it is necessary to pass through the outer layer without damaging it, as well as its reflective, semi-permeable layer.

Older than said dual layer discs are hybrid optical recording discs, mainly used to obtain the compatibility of stored data among Mac and PC systems, so that the information is not duplicated, but both Mac and PC systems work on the same files. Said hybrid discs, as indicated by their name, comprise a read only memory (ROM) area and a recordable area, that is, they are a hybrid between a CD-ROM/DVD-ROM and the CD-R/DVD±R or the dual-layer DVD. Therefore, they are discs in which information is mould stored therein during its manufacturing in the ROM area, which is readable but not modifiable, and allowing user to store data in their recordable area.

Furthermore, for each type of the described optical laser-recording disc a rewritable version thereof exists, that is, the disc may be erased and subsequently written a desired number of times (CD-RW, DVD-RW, DVD+RW...).

Whatever the selected type of laser-recordable optical disc is, the use of a recording unit or recorder is necessary as well as a recording program so that data may be stored on said disc.

There are exclusive recorders for CD-R, for DVD+R, for DVD-R, or for dual-layer DVD, although any of the DVD recorders can record CD-R. There also exist dual recorders that allow the DVD±R formats to be recorded.

With respect to the recording programs, there is a vast offer. The recording programs usually include an enormous variety of functionalities, most of them relating to the recording of the different types of optical discs herein described.

The data storage on the described laser-recordable optical discs has great many disadvantages that are described below.

Firstly, the recording programs are increasingly complicated to configure and use, mainly due to the high amount of functionalities included. The situation becomes worse when considering that, for each type of selected disc and data to be stored, it is necessary to configure the recording program. It is said that user should be an expert user, with important computer knowledge. Said disadvantage involves significant waste of time and money, especially in case the user acts at a professional level.

As a consequence of the quantity of functionalities included in the recording programs, the hardware requirements are increasingly larger, mainly at a processing, capacity of storage and working memory level. This involves a great economic expenditure for the users, who every so often have to update their computer, or to acquire a new one.

On the other hand, the existence of different recording programs forces the users to know, although superficially, the operation of each of them for being able to store data wherever they are. Since each computer may have a different recording program installed, if the user is in a situation in which he/she does not know said program, he/she will not be able to store the data of his/her interest or he/she will waste a significant amount of time in knowing its operation.

Also, especially when the user is working in a computer that is not his/her own one, he/she should waste time looking for the access to the recording program, some of them being difficult to identify, among the accesses of all of the programs installed in the computer. Another disadvantage is when the recording program is in a language unknown for the user.

In this way, if the user is a situation in which the recording program is of difficult use, he/she does not know the operation of the recording program, he/she does not know where its access is and, furthermore, he/she does not know the language in which the interfaces of the program are, the impossibility of storing the desired data is thus obvious.

Another disadvantage is due to the rapid evolution of the optical recording discs (speeds, capacities, types, etc.) requiring a maintenance of the recording firmware and, consequently, the recording program too. This involves a significant waste of time, as well as, in some cases, a high updating cost. Furthermore, said updating may be carried out only by an expert user.

Accordingly, from the above mentioned disadvantages it is clear that the situation for data storage on optical laser-recording discs is not the appropriate, especially when considering that computing is arriving to more and more users, most of them with a little skill.

### Summary of the invention

According to this background, an object of the present invention is to provide an optical recording disc of the initially referred type that allows overcoming the previously described problem of facilitating the data storage.

This object is achieved according to Claim 1, providing an optical recording disc that is characterized in that the read only area comprises means for recording data on the recordable area.

The optical recording disc according to the invention has a number of advantages.

Firstly, the user always uses the same means for recording data on the disc, for example, a recording program, and therefore he/she only needs to know the operation of this program, regardless of where it is or the computer that is being used. Also, since the recording program used is always the same, the language of the interfaces is the appropriate for the user, according to his/her choice.

Secondly, the recording program is user friendly (essential functionalities), among other things because it should use a minimum space (approximately 1 Mb) in the optical recording disc, so that the recordable area has the maximum capacity and the largest amount of data possible may be stored.

As a consequence of what it has been described, for evident reasons, important hardware requirements are not needed, neither at a processing level, neither at a working memory level, neither at a storage level. Important processing or working memory resources are not needed since it is a small-size computer program, with basic functionalities. Space on the computer hard disk is not required for the recording program to be stored (it is stored on the read only area of the own recording disc) or run. Also, execution of the recording program does not leave any type of file format traces in the hard disk.

Since, as stated before, no external recording program or hardware with high requirements is necessary, and consequently updating thereof, an important reduction of costs is thus achieved regarding the situation known at present.

Furthermore, since the recording program is intended for copying certain data formats, the configuration of this recording program according to the type of data to be recorded is not necessary, thus facilitating data storage on the disc, object of the invention.

On the other hand, since the optical recording disc comprises a read only memory area which, by definition, cannot be deleted or altered, said disc can not be used for storing CD-Audio format data. Firstly, the incorporated recording program and any other known external recording program do not allow recording CD-Audio format data on a disc with the described features (errors of the type *"not empty disc, disc can not be copied"* occur). Secondly, in case of recording CD-Audio format data is achieved on the recordable area of the disc, the disc would be rejected or noise would be played by most of the CD-Audio readers, as they would be reading data, which could cause damages on the speakers (the same occurs when a CD-ROM is tried to be read by a CD-Audio reader). These features can make price reduction in these optical recording discs easier, since they could be exempt from paying a royalty levying on them in certain countries due to Intellectual Property related issues.

Preferably, the read only area may comprise means for automatically operating the means for recording data on the recordable area.

In this way, the recording means, for example a recording program, are automatically displayed to the user when inserting the disc on a recording device, without installation in the computer hard disk, which involves ease for storing data on said disc as there is no need to look for access to the recording means in the computer in which he/she is working.

According to a feature of the invention, the means for recording data on the recordable area may comprise means for detecting operating parameters of a recording device of the optical recording disc.

In the known art, a recording device needs a driver for connecting and communicating with the computer to which is related. Said driver is a program which is stored on the recording unit itself (firmware), and which needs to be updated for fixing bugs or adding other features thereto. When said updating is carried out, updating of the recording program is also necessary. All involve, among other things, a significant waste of time, especially if the user is not an expert user, as well as costs that, in some cases, are high.

In the present invention said disadvantage is overcome by the presence of means for detecting operating parameters of said recording device, which try different options within said operating parameters until the most appropriate is found, obtaining an adaptation of the means for recording data on the recording unit. Thereby, updatings for keeping the data recording means in operation are no longer necessary.

An optical recording disc is therefore obtained for facilitating data storage, which comprises a recording program for recording data on the disc itself which recording program is run automatically as the disc is inserted into a recording device, the disc being ready to be used in any recording unit.

According to a further feature of the invention, the means for recording data on the recordable area may comprise means for identifying the recording device.

The object of said means for identifying the recording device is ascertaining whether the optical recording disc has been inserted into a reading device or into a recording device. In case it has been inserted into a reading device, the data stored on the disc may be accessed, but the data recording means are not automatically displayed, as they can not be used.

As stated before, the means for recording data on the recordable area may be a recording program running on a computer memory, e. g., the random access memory (RAM).

According to a further aspect, the invention provides a method for recording data on an optical recording disc such as the one described above, which comprises the steps of (A) operating the means for recording data on the recordable area of the optical recording disc; (B) capturing the data to be recorded on the recordable area of the disc; and (C) saving the captured data on said recordable area of the optical recording disc.

In the step A, operation of the means for recording data on the recordable area of the disc may be carried out automatically.

Furthermore, the method may comprise a step D of detecting the operating parameters of the recording unit.

The method may also comprise, before the step A, a step E of identifying the recording device.

According to still a further aspect, the invention provides a computer program comprising program instructions for causing the previously described method to be carried out by a computing system.

The computer program may also be stored on a memory of the computing system, or it may be carried by an electrical carrier signal.

### Brief description of the drawings

For a better understanding of what it has been set out, drawings are herein accompanied in which, schematically and only by way of non limitative example, a practical case of embodiment is shown.

In the drawings:
Fig. 1 shows a block diagram of a suitable computing system for implementing a preferred embodiment of the present invention;
Fig. 2 shows a schematic drawing of an optical recording disc, object of the invention; and
Fig. 3 shows a flow chart of the method for recording data on the optical recording disc in Fig. 2, according to the invention.

### Description of a preferred embodiment

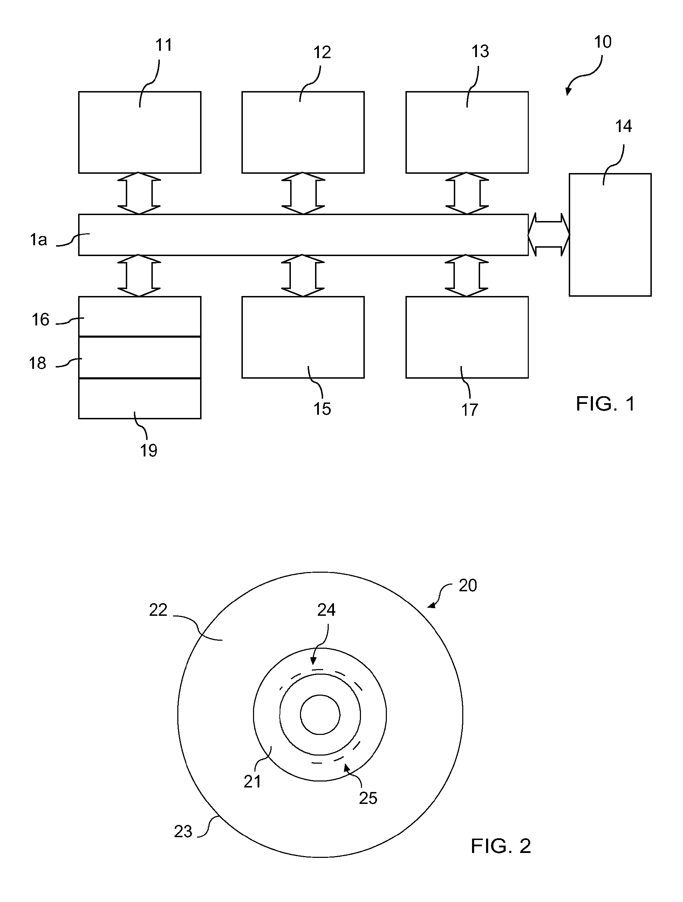

A preferred embodiment of the present invention may be implemented on a computing system as the one shown in Fig. 1.

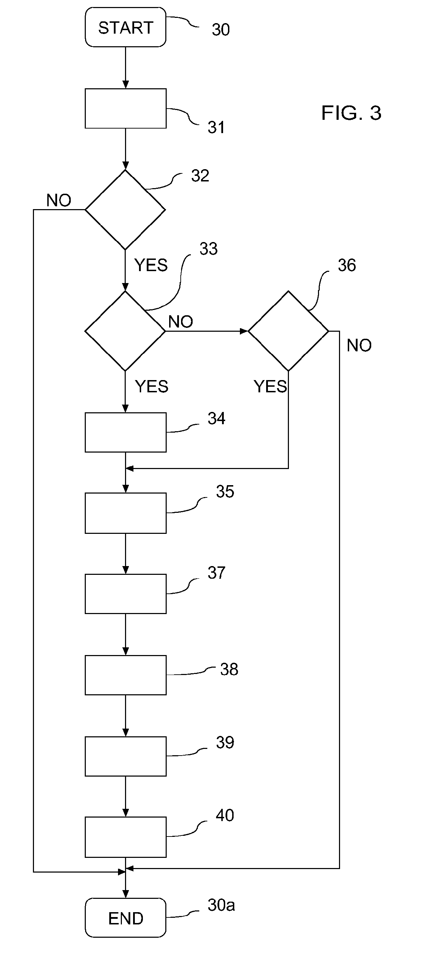

The basic configuration of the computing system 10 in Fig. 1 comprises a central processing unit (CPU) 11, intended to interpret and run instructions, for example of programs, for controlling and processing data on the computing system 10, and different peripheral devices to which the CPU gains access, including a mouse 12, a keyboard 13, a recording unit 14 (recorder) for optical recording discs (Fig. 2), and a monitor 15 suitable for displaying graphic images, the mouse 12 and the keyboard 13 being input devices, and the monitor 15 an output device. The mouse 12 comprises at least a right button and a left button.

The CPU 11 also gains access to a secondary memory 16, and to a working RAM memory (Random Access Memory) 17. The secondary memory 16 is intended, among other things, to store the applications 18, and the operating system 19 on which said applications operate, data mass storage devices, such as hard disks, CD-ROM or DVD-ROM, being distinguished within said secondary memory 16. The RAM memory 17 is a memory that allows the computing system 10 to temporarily store information to which the CPU 11 is frequently accessing and that is needed for its correct operation. It is to be emphasized that the RAM memory 17 is a fast access, volatile memory, that is, when the computing system 10 is turned off all the stored information is deleted therefrom.

The CPU 11 communicates with the peripheral devices 12, 13, 14, 15 (input and output devices), with the secondary memory 16, and with the RAM memory 17 by means of a set of connections referred to as system bus 1. System bus 1 is essentially a shared bi-directional path connecting the different parts in the previously described computing system, by means of address, control and data signals.

In the present preferred embodiment, the computing system is a personal computer 10 in which the CPU 11 is a 2.66GHz Intel^{®} Pentium^{®} 4 processor; the RAM memory 17 is a 256MB DDR RAM memory (Double Data Rate RAM) at 333 MHz; the secondary memory 16 is a 80 Gb hard disk at 7,200 rpm; the recorder 14 is dual, i. e., it allows to record DVD±R/RW, at a speed of 8xDVD-R and 12xDVD+R; the monitor 15 is a 17 inch, 1,280 x 1,024 pixel LCD ; the mouse 12 is optical and wireless with radio frequency technology; and the keyboard 13 is also wireless, with radio frequency technology. The operating system 19 used is Windows XP Professional of Microsoft^{®} Corporation, although it is apparent for those skilled in the art that the present invention may be implemented in other operating systems.

The described computing system 10 is only provided by way of a non limitative example. The present invention may be implemented in any type of computing system, so long as the minimum requirements set forth by the invention are met.

An optical recording disc 20 is shown according to the invention in Fig. 2, more particularly a hybrid DVD-R comprising a read only area 21 and a recordable area 22 on an optical substrate 23. The read only area 21 stores a data recording program 24 on the recordable area 12, and a file 25 for the autorun of the recording program 24 when the optical recording disc 20 is inserted into the recorder 14.

The data to be stored on the recordable area 22 of the DVD 20, mainly video and image files, are stored on the hard disk 16 of the computer 10, although they could be stored on any other medium or computer.

Said file 25 is named "autorun.inf" so that it is detected by the operating system 19, when the DVD 20 is inserted into the recorder 14, and the parameters contained therein relating to said autorun (Auto-Play function of the operating system) are acquired, such as the icon to be prompted, or the application to be run. This file should always start with a line like "[autorun]", the parameters determining the autorun options being arranged under this header, one in each line. One example of this file for the present preferred embodiment may be:
*[autorun]*
*Icon =recording_program-icon*
*Open=recording_program.exe*

The recording program 24 comprises a data recording module, a module for detecting the operating parameters of the recorder, and a module for the identification of the recorder.

The recording module is the one that allows, among other things, selecting the data to be recorded in the DVD 20, searching for all the picture and video files in the secondary memory (hard disk) 16 of the personal computer 10 for facilitating to the user the search of the data desired to store, or to run the recording for storing the selected data on the recordable area 22 of the DVD 20. For this purpose, the recording module creates a graphical user interface comprising at least an area in which the data to be stored are displayed; an area in which the data to be stored may be selected; a control element in the form of a button, icon and/or menu item for running the recording generating a command signal causing the recorder 14 to save the selected data on the recordable area 22 of the DVD 20; and a control element in the form of a button, icon and/or menu item to carry out the search of all the images and/or videos in the computer 10 generating a command signal that causes the search of said data and displaying them to the user through the graphical user interface, from the area intended for selection of the data to be stored. Both the selection area and the displaying area of the selected data allow carrying out a number of options (control elements) generating actions (command signals). In this way, it is possible, for example, to clear an element from the area displaying the data to be stored, or to drag, by means of the mouse 12, an element from the area displaying the data to be selected to the area of the selected data for storing them on the DVD 20.

The object of the detection module of the operating parameters of the recorder is to detect the appropriate operating parameters of the recorder 14 in which the DVD has been inserted 20, with the purpose of avoiding updating the firmware of the recorder 14 and the recording program 24. Basically, this module produces an adaptation of the recording program 24 to the recorder 14, through which it seeks to store the data on the recordable area 22 of the DVD 20, from the detection, by means of the trial and error method, of the suitable parameters for the correct operation of the recorder 14. In this way, the recording program 24 knows the instructions that should be sent to the recorder 14 so that the correct recording of data on the recordable area 22 occurs, without the need for carrying out updates of firmware of the recorder 14 neither the recording program 24 itself.

The module for the identification of the recorder is suitable for detecting whether the unit 14 in which the DVD has been inserted 20 is either a reader or a recorder. In case it is a reader, the data stored on the DVD 20 is accessible by the user, but the autorun of the recording program 24 of the autorun file 25 does not occur, as it is not usable.

It is important to emphasize that the recording program 24 runs in the RAM memory 17 of the computer 10. It is necessary that both the instructions of the program 24 and the data are transferred from the RAM 17 to the CPU 11, and that the data which have been processed in the CPU 11 are transferred back to the RAM 17, so that the data stored on the RAM 17 is processed by the computer 10. Interconnection between the CPU 11 and the RAM 17 is carried out by means of the bus 1.

A description of a preferred embodiment of the method for recording data on an optical recording disc according to the invention will now follow. This description will be carried out from the previously described elements.

As it can be seen from Fig. 3, starting from an idle step 30, the method comprises a step 31 of inserting the DVD 20 into the recorder 14, from which, in a step 32, the recording program 24 checks whether the unit in which the DVD has been inserted 20 is a recorder. In case of a negative answer, the control is returned to a method end step 30a, the data stored on the DVD 20 being accessible. In the event of an affirmative answer, in a step 33, the operating system 19 checks if the autorun file exists 25 or if this file has the appropriate parameters.

In the event of an affirmative answer, in a step 34, automatic run of the recording program 24 occurs, from which, in a step 35, the user selects data (mainly images and videos) to be stored on the recordable area 22 of the DVD 20. In the event of a negative answer, if the recording program 25 is run manually in a step 36, the control of the method is passed to step 35; otherwise, the control of the method is passed to the method end step 30a, in which the data stored on the DVD 20 are accessible.

Subsequently, as the data recording is validated in a step 37, the appropriate parameters for the operation of the recorder 14 are determined by the recording program 25, in a step 38, then carrying out, in a step 39, the recording of the selected data on the recordable area 22 of the DVD 20, from the determined parameters. Once the recording is completed, in a step 40, the data are made accessible.

It is important to highlight that the position of some of the described steps may vary within the method. In this way, for example, the step 38 of determining the suitable operating parameters of the recorder 14 may be carried out at any time after insertion of the DVD 20 into the recorder 14. Even this step 38 or some other step may be carried out in background regarding another step or steps of the described method.

Although specific embodiments of the present invention have been described and depicted, it is apparent that those skilled in the art will be able to introduce variants and modifications, or replace the details by other technically equivalent, without departing from the scope of protection defined by the appended claims.

In this way, for example, the type of disc 20 used may be any other one, so long as it allows storing the recording program 25 and running said program 25 for storing data on the disc 20 itself.

Also, although the embodiments of the invention described with reference to the drawings comprise computer apparatus and processes performed in computer apparatus, the invention also extends to computer programs adapted for putting the invention into practice. The computer program may be in the form of source code, object code or in a code intermediate source and object code such as in partially compiled form, or in any other form suitable for use in the implementation of the processes according to the invention. Although it is clear that the recording program 25 should be contained on the read only area 21 so that the invention may be carried out, it is possible that the carrier means is any other entity or device in which the program may be carried.

For example, the carrier means may comprise a storage medium, such as a ROM, for example a CD ROM or a semiconductor ROM, or a magnetic recording medium, for example a floppy disc or a hard disk. Further, the carrier may be a transmissible carrier such as an electrical or optical signal which may be conveyed via an electrical or optical cable or by radio or other means.

When the computer program is embodied in a signal which may be conveyed directly by a cable or other device or means, the carrier may be constituted by such cable or other device or means.

Alternatively, the carrier may be an integrated circuit in which the computer program is embedded.

## Claims

1. An optical recording disc (20) comprising a read only area (21) and a recordable area (22), **characterized in that** the read only area (21) comprises means (24) for recording data on the recordable area (22).

2. An optical disc according to claim 1, **characterized in that** the read only area (21) comprises means (25) for automatically operating the means (24) for recording data on the recordable area (22).

3. An optical disc according to any of claims 1 or 2, **characterized in that** the means (24) for recording data on the recordable area (22) comprise means for detecting operating parameters of a recording device (14) of the optical recording disc (20).

4. An optical disc according to any of claims 1 to 3, **characterized in that** the means (24) for recording data on the recordable area (22) comprise means for identifying the recording device (14).

5. An optical disc according to any of claims 1 to 4, **characterized in that** the means for recording data on the recordable area (22) are a recording program (24).

6. An optical disc according to claim 5, **characterized in that** the recording program (24) runs in a memory (16; 17) of a computer (10).

7. An optical disc according to claim 6, **characterized in that** the memory of the computer comprises a random access memory (RAM) (17).

8. A method for recording data on an optical recording disc (20) according to any of claims 1 to 7, comprising the steps of:
A) Operating (34; 36) the means (24) for recording data on the recordable area (22) of the optical recording disc (20);
B) Capturing (35) the data to be recorded on the recordable area (22) of the disc; and
C) Saving (39) the captured data on said recordable area (22) of the optical recording disc (20).

9. A method according to claim 8, **characterized in that**, in step A, operating of means (24) for recording data on the recordable area (22) of the disc (20) is carried out automatically (33).

10. A method according to any of claims 8 or 9, **characterized in that** it comprises a step D (38) for detecting the operating parameters of a recording device (14).

11. A method according to any of claims 8 to 10, **characterized in that** it comprises, before the step A, a step E (32) for identifying the recording device (14).

12. A computer program comprising program instructions for causing a computer system to perform the method according to any of claims 8 to 11.

13. A computer program according to claim 12, **characterized in that** it is stored in a memory (16; 17) of the computer system (10).

14. A computer program according to any of claims 12 or 13, **characterized in that** it is carried on an electrical carrier signal.
